# EUROPÄISCHE PATENTSCHRIFT

(11) **EP 4 232 382 B1**
(45) Veröffentlichungstag und Bekanntmachung des Hinweises auf die Patenterteilung: **21.08.2024**
(21) Anmeldenummer: 21783393.8
(22) Anmeldetag: 06.09.2021
(51) Int. Cl.: B65G 47/06

(54) **FÖRDERVORRICHTUNG FÜR ZYLINDRISCHE WERKSTÜCKE**
CONVEYOR DEVICE FOR CYLINDRICAL WORKPIECES
DISPOSITIF TRANSPORTEUR POUR PIÈCES CYLINDRIQUES

(30) Priorität: 23.10.2020 DE 102020127918
(43) Veröffentlichungstag der Anmeldung: 30.08.2023
(73) Patentinhaber: Schaeffler Technologies AG & Co. KG, 91074 Herzogenaurach (DE)
(72) Erfinder: SCHUSTER, Alfred, 96132 Schlüsselfeld (DE); GOLUNSKI, Rafael, 97422 Schweinfurt (DE)
(86) Internationale Anmeldenummer: PCT/DE2021/100731
(87) Internationale Veröffentlichungsnummer: WO 2022/083818

(56) Entgegenhaltungen:
- DE-A1- 102005 015 032
- DE-B3- 102019 211 769
- DE-T2- 68 907 021

## Beschreibung

Die Erfindung betrifft eine Fördervorrichtung für zylindrische Teile, das heißt Werkstücke, wie zum Beispiel Bolzen.

Aus der DE 296 14 393 U1 ist eine Vorrichtung zum automatischen Fördern von Teilen wie Schweißmuttern oder Einpressmuttern aus einem Vorratsbehälter bekannt. Hierbei wird ein Gerät über eine Förderstrecke beschickt, bei welcher es sich um eine Profilschiene oder einen Schlauch handeln kann. Die Fördervorrichtung, an welche die Förderstrecke angeschlossen ist, umfasst einen elektromotorisch angetriebenen Rotationskörper mit mehreren schräg angeordneten Hohlräumen zur Aufnahme von Teilen aus einem Schüttgutvorrat. Ein- und Auslauföffnungen für die Teile sind elliptisch geformt, wobei die den Rotationskörper verlassenden Teile an eine Schwenkablaufrutsche und von dort aus weiter an eine Sortiereinheit übergeben werden.

Ein weiteres System zum Zuführen von Verbindungselementen zu einer Einrichtung zum Einfügen und/oder Befestigen der Verbindungselemente in Werkstücken ist in der DE 197 56 798 A1 beschrieben. Auch dieses System kann eine flexible Zuführung umfassen. Eine Nachlade- und Vereinzelungseinrichtung, an welche die flexible Zuführung angeschlossen ist, wird mit Druckluft betrieben.

Die DE 20 2006 017 239 U1 offenbart eine Vorrichtung zum Zuführen von bolzenförmigen Elementen an eine Zuführposition für das jeweilige Element. Die Vorrichtung umfasst einen Zuführschlauch mit Abschnitten unterschiedlichen Durchmessers. Hierbei schließt an einen Zuführabschnitt des Zuführschlauchs ein Bremsabschnitt an, welcher einen im Vergleich zum Zuführabschnitt verkleinerten Innendurchmesser aufweist. Der Bremsabschnitt ist elastisch verformbar, wobei durch einen vorgegebenen Pneumatikdruck ein im Bremsabschnitt befindliches bolzenförmiges Element durch diesen Abschnitt hindurchgedrückt werden kann.

Eine in der DE 22 34 566 B2 beschriebene Vereinzelungsvorrichtung für Schrauben ist zur Anordnung am Ende einer geneigten, die Schrauben unter Schwerkraftwirkung zuführenden Rutsche vorgesehen. Die Vereinzelungseinrichtung umfasst einen waagrecht, quer zur Rutsche verschiebbaren, mit einer Antriebseinrichtung verbundenen Schieber.

Bei einer in der DE 10 2010 021 474 A1 beschriebenen Fördervorrichtung für Stückgut, insbesondere Schrauben oder Bolzen, werden die zu fördernden Teile per Magnetkraft aus einem Behältnis herausgezogen. Hierbei sind Magneten auf einer Kette als Endlosfördervorrichtung angebracht.

Die DE 698 07 021 T1 beschreibt eine Vorrichtung zum Aufrichten von Fläschchen, die durch einen Seilförderer liegend transportiert und an einen Bandförderer übergeben werden.

Der Erfindung liegt die Aufgabe zugrunde, eine gegenüber dem genannten Stand der Technik weiterentwickelte Fördervorrichtung für zylindrische Werkstücke anzugeben, welche sich durch eine besonders flexible Anwendbarkeit, das heißt Möglichkeit der Umrüstung für unterschiedliche Werkstücke, auszeichnet.

Diese Aufgabe wird erfindungsgemäß gelöst durch eine Fördervorrichtung gemäß Anspruch 1. Die Fördervorrichtung umfasst ein Basisgerät, welches zwei zusammen antreibbare Förderscheiben aufweist, deren Abstand zueinander einstellbar ist. Weiter umfasst die Fördervorrichtung ein am Basisgerät zu befestigendes Aufsatzteil und ein Einsatzelement, welches derart zwischen dem Basisgerät und dem Aufsatzteil positionierbar ist, dass durch die beiden drehbaren Förderscheiben zusammen mit den genannten nicht drehbaren Teilen, nämlich dem Aufsatzteil und dem Einsatzelement, ein Förderkanal für die zylindrischen Werkstücke gebildet ist, welcher sich über mehr als 45° um die Rotationsachse der Förderscheiben erstreckt. Die Förderung der im Wesentlichen zylindrischen Werkstücke erfolgt in diesem Kanal durch Reibungs- und/oder Klemmkräfte zwischen den Förderscheiben und den Werkstücken. Diese Reibungs- und/oder Klemmkräfte überwinden bremsende Kräfte, die zwischen den Werkstücken und den beiden feststehenden Teilen, das heißt dem Aufsatzteil und dem Einsatzelement, auftreten, so dass die Teile in die durch die Rotation der Förderscheiben vorgegebene Richtung gefördert werden.

Insbesondere erstreckt sich der Förderkanal für die zylindrischen Werkstücke über mehr als 90° um die Rotationsachse der Förderscheiben.

Einstellmöglichkeiten der Fördervorrichtung für unterschiedliche Werkstücke sind zum einen durch die Variation des Abstandes zwischen den Förderscheiben gegeben, wobei die Förderscheiben die Werkstücke in besonders einfacher Ausgestaltung ausschließlich reibschlüssig antreiben. Zum anderen ist eine Anpassung der Fördervorrichtung an die Dimensionierung der zu fördernden Werkstücke durch Auswahl der an das Basisgerät anzufügenden Komponenten, das heißt des Aufsatzteils sowie des Einsatzelementes, möglich. Im Gegensatz zu den Förderscheiben handelt es sich bei dem Aufsatzteil und bei dem Einsatzelement um nicht rotierende Komponenten. Der Förderkanal ist somit an zwei einander diametral gegenüberliegenden Seiten durch bewegliche Komponenten, nämlich die Förderscheiben, begrenzt, wogegen sich an den zwei weiteren, sich ebenfalls diametral gegenüberliegenden Seiten des Förderkanals starre Elemente in Form des Aufsatzteils sowie des Einsatzelements befinden. Insgesamt ist der Querschnitt des Förderkanals beispielsweise näherungsweise kreisrund oder annährend quadratisch, wobei in keinem Fall eine vollständig geschlossene Wandung des Förderkanals gegeben ist.

Die Fördervorrichtung kann zum Anschluss mindestens eines Schlauches vorgesehen sein, welcher von den Werkstücken durchlaufen wird. Insbesondere ist sowohl an die Eingangsseite als auch an die Ausgangsseite der Fördervorrichtung jeweils ein Schlauch anschließbar. In besonders vorteilhafter Ausgestaltung sind zum Anschluss von Schläuchen vorgesehene Kupplungsstücke ausschließlich am Aufsatzteil angeordnet. Damit ist es möglich, unterschiedliche Aufsatzteile, welche zur Verbindung mit unterschiedlich dimensionierten Schläuchen und zur Förderung unterschiedlicher Werkstücke vorgesehen sind, bereitzuhalten, wobei die verschiedenen Aufsatzteile mit ein und demselben Basisgerät kombinierbar sind. Zur Einstellung auf unterschiedliche Werkstücke sind am Basisgerät, abgesehen von der Variation des Abstandes zwischen den Förderscheiben, keine Änderungen vorzunehmen. Die Kupplungsstücke können in handhabungsfreundlicher Weise Teile von selbstschließenden, das Herausfallen von Werkstücken aus den Schläuchen verhindernden Kupplungen sein.

Die am Aufsatzteil angebrachten Kupplungsstücke sind beispielsweise nebeneinander, das heißt auf derselben Seite des Aufsatzteils, angeordnet. In diesem Fall ist der Förderkanal als 180°-Umlenkkanal ausgebildet, wobei die Werkstücke beispielsweise von oben durch einen ersten Schlauch der Fördervorrichtung zugeführt werden und durch einen weiteren Schlauch nach oben weitergefördert werden. Insgesamt ist das Aufsatzteil beispielsweise rahmenförmig gestaltet, wobei es zur Befestigung an einem durch das Basisgerät gebildeten Geräterahmen vorgesehen ist. Die Förderscheiben können hierbei derart verstellbar sein, dass eine der Förderscheiben stirnseitig aus dem rahmenförmigen Aufsatzteil herausragt, wobei eine kreisrunde, zur Mittelachse der Fördervorrichtung konzentrische Öffnung im Aufsatzteil durch diese Förderscheibe größtenteils ausgefüllt wird.

Im Unterschied zum Aufsatzteil ist das Einsatzelement in vorteilhafter Ausgestaltung in Axialrichtung schmaler als der Förderkanal. Die Axialrichtung bezieht sich hierbei auf die Rotationsachse der Förderscheiben, das heißt die Mittelachse der Fördervorrichtung. Die schmale Gestaltung des Einsatzelementes hat zum einen den Vorteil, dass eine Verstellung der Förderscheiben in einem weiten Bereich möglich ist. Zum anderen sind lediglich schmale Kontaktflächen zwischen dem Einsatzelement und den Werkstücken gegeben, was hinsichtlich der beim Fördern auftretenden Reibungskräfte zwischen den Werkstücken und dem Einsatzelement von Vorteil ist. Ist der Förderkanal als 180°-Umlenkkanal ausgebildet, so hat das Einsatzelement typischerweise eine U-Form. Auch eine geschlossene, rahmenartige Form des Einsatzelementes ist möglich. In allen Fällen kann das Einsatzelement montagefreundlich am Basisgerät einhängbar und durch das Aufsatzteil am Basisgerät sicherbar sein.

Zur Befestigung des Aufsatzteil am Basisgerät ist beispielsweise ein werkzeuglos betätigbarer Mechanismus, insbesondere Schnappmechanismus, vorgesehen. Alternativ ist das Aufsatzteil beispielsweise durch Verschraubung am Basisgerät befestigbar.

Gemäß einer vorteilhaften Weiterbildung ist zwischen einen Elektromotor des Basisgerätes und die gemeinsam rotierenden Förderscheiben eine Überlastkupplung, insbesondere in Form einer Rastkupplung, geschaltet. Als Antriebsvorrichtung der Fördervorrichtung ist insbesondere ein Getriebemotor geeignet. Alternativ kommt ein getriebeloser Antrieb, das heißt Direktantrieb, in Betracht.

Nachfolgend wird ein Ausführungsbeispiel der Erfindung anhand einer Zeichnung näher erläutert. Hierin zeigen:

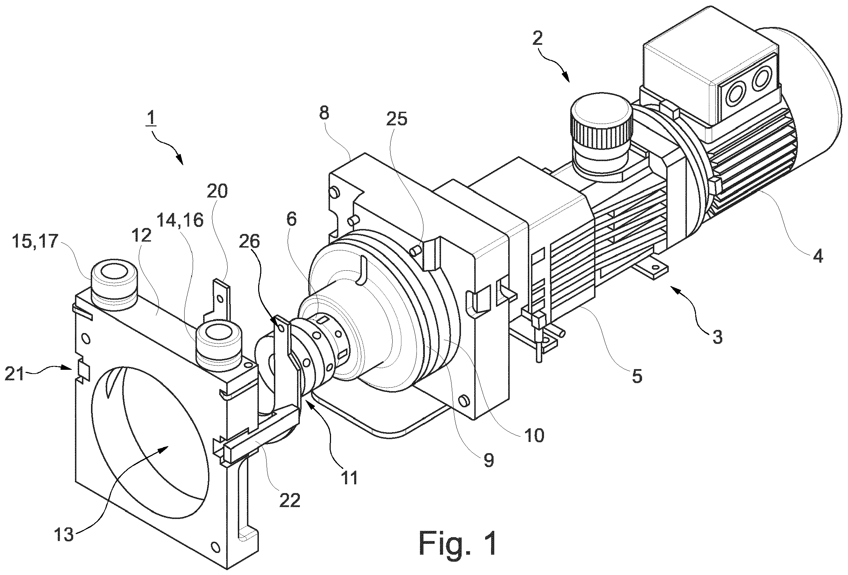

- Fig. 1: eine Fördervorrichtung für zylindrische Werkstücke in Explosionsdarstellung,
- Fig. 2: die Fördervorrichtung in einer Schnittdarstellung,
- Fig. 3: Komponenten der Fördervorrichtung in schematisierter Darstellung,
- Fig. 4: ein Detail der Fördervorrichtung in perspektivischer Ansicht.

Eine insgesamt mit dem Bezugszeichen 1 gekennzeichnete Fördervorrichtung ist zur Zuführung zylindrischer Werkstücke 18, zum Beispiel Bolzen oder Buchsen, zu einer nicht dargestellten Montagemaschine vorgesehen. Die Fördervorrichtung 1 weist ein Basisgerät 2 auf, welches einen Getriebemotor 3 mit einem Elektromotor 4 und einem Getriebe 5 umfasst. Eine Welle 6, die sich auf der Ausgangsseite des Getriebes 5 befindet, ist ebenfalls dem Basisgerät 2 zuzurechnen. Die Welle 6 ragt stirnseitig aus einem mit 8 bezeichneten Geräterahmen des Basisgerätes 2 heraus. Auf der Welle 6 sind zwei Förderscheiben 9, 10 angeordnet, wobei der mit d_{F} bezeichnete Abstand zwischen den Förderscheiben 9, 10 mit Hilfe einer Schraubverstellung 11, die sich auf der Welle 6 befindet, variiert werden kann.

Zusätzlich zum Basisgerät 2 umfasst die Fördervorrichtung 1 ein Aufsatzteil 12, welches auch als Gehäusewerkzeug bezeichnet wird. Im einsatzbereiten Zustand kann die Förderscheibe 9, je nach eingestelltem Abstand d_{F}, aus einer, vorzugsweise zentralen, kreisrunden Öffnung 13 im Aufsatzteil 12 etwas herausragen. Die Förderscheiben 9, 10 sind in jeder Einstellung des Basisgerätes 2 konzentrisch zur mit R bezeichneten Rotationsachse der Welle 6 angeordnet. Um mechanische Überlastungen in jedem Zustand, selbst bei einer Beschickung mit falschen Werkstücken, zu verhindern, ist zwischen den Förderscheiben 9, 10 und den Getriebemotor 3 eine Überlastkupplung 7 geschaltet.

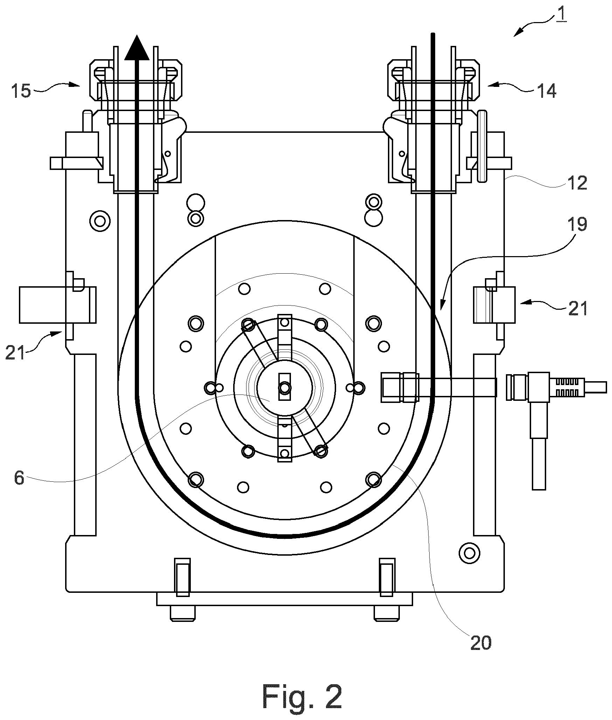

Die mittels der Fördervorrichtung 1 zu transportierenden Teile werden in Strangform durch Schläuche gefördert. Eine eingangsseitige Schlauchkupplung des Aufsatzteils 12 ist mit 14, eine ausgangsseitige Schlauchkupplung mit 15 bezeichnet. Hierbei sind Kupplungsstücke 16, 17 der Schlauchkupplungen 14, 15 nebeneinander auf einer Seite, im Ausführungsbeispiel der oberen Seite, des rahmenförmigen Aufsatzteils 12 angeordnet. Die Zuführung der Werkstücke 18 zur Fördervorrichtung 1 erfolgt beispielsweise durch Schwerkraft. Innerhalb der Fördervorrichtung 1 werden die Werkstücke 18 durch Reibschluss zwischen den Förderscheiben 9, 10 auf einer gekrümmten Bahn gefördert, die eine Umlenkung um 180° bewirkt und in Figur 2 durch einen einen Förderkanal 19 durchziehenden Pfeil veranschaulicht ist. Der Förderkanal 19 weist eine unvollständig geschlossene Wandung auf. Begrenzungen des Förderkanals 19 stellen die Förderscheiben 9, 10 und das Aufsatzteil 12 sowie ein Einsatzelement 20 dar.

Insgesamt ist der Förderkanal 19 damit durch zwei rotierende Elemente, nämlich die Förderscheiben 9, 10, und zwei starre Elemente, nämlich das Aufsatzteil 12 und das als Führungsblech fungierende Einsatzelement 20, begrenzt. Die mit D₂₀ bezeichnete Dicke des Führungsblechs 20 ist geringer als der Abstand d_{F} zwischen den Förderscheiben 9, 10. Je nach genauer Lage der Werkstücke 18 zwischen den Förderscheiben 9, 10 kann Gleitreibung zwischen den Werkstücken 18 einerseits und dem Aufsatzteil 12 und/oder dem Einsatzelement 20 andererseits auftreten. In jedem Fall sind die Werkstücke 18 beim Verlassen des Förderkanals 19 nach wie vor strangförmig angeordnet. Die Reibungskräfte, welche die Werkstücke 18 zwischen den Förderscheiben 9, 10 halten, sorgen dafür, dass die Werkstücke 18 auf der Ausgangsseite der Fördervorrichtung 1 gegen die Schwerkraft mehrere Meter, beispielsweise 2 bis 3 Meter, in Einzelfällen bis zu 5 Meter, nach oben gefördert werden können. In typischen Anwendungsfällen weisen die zu fördernden Werkstücke 18 einen Durchmesser im Bereich von 3,5 mm bis 18 mm auf. Die Fördergeschwindigkeit ist durch die Motordrehzahl des Elektromotors 4 einstellbar.

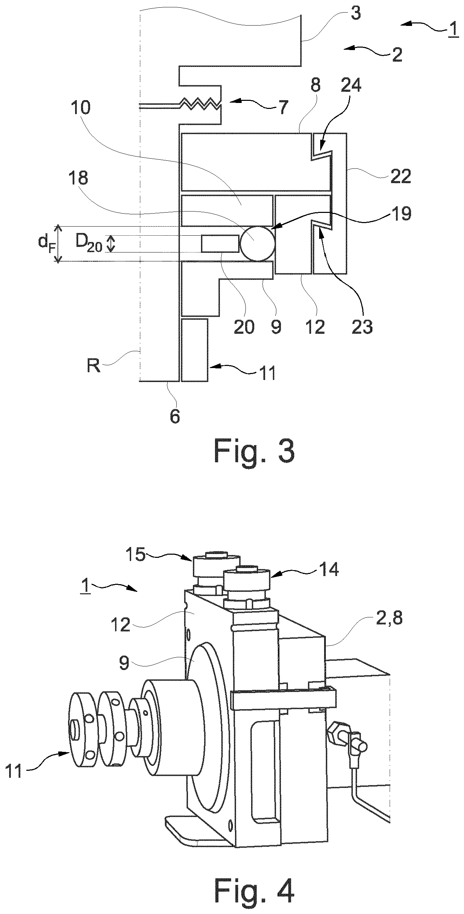

Das Basisgerät 2 einschließlich der Förderscheiben 9, 10 ist auf verschiedene Werkstücke 18 einstellbar. Zu diesem Zweck ist lediglich der Abstand d_{F} zwischen den Förderscheiben 9, 10 einzustellen, wobei die Förderscheiben abweichend von der vereinfachten Darstellung nach Fig. 3 partiell konisch gestaltet sein können. Alle weiteren Umstellungen betreffen das Aufsatzteil 12 sowie das Einsatzelement 20. Insbesondere sind Kupplungen 14, 15 zu verwenden, die an die Dimensionierung der anzuschließenden Schläuche sowie der zu fördernden Werkstücke 18 angepasst sind. Die Schlauchkupplungen 14, 15 sind derart gestaltet, dass beim Abnehmen der Schläuche von den Kupplungsstücken 16, 17 keine Werkstücke 18 aus den Schläuchen fallen. Die Kupplungsstücke 16, 17 verbleiben an dem auf die Werkstücke 18 abgestimmten Aufsatzteil 12.

Bevor das Aufsatzteil 12 mit dem Basisgerät verbunden wird, wird das als U-förmiges Führungsblech gestaltete Einsatzelement 20 zunächst lose an den Geräterahmen 8 angehängt. Hierbei greifen Zapfen 25, welche sich am Geräterahmen 8 befinden, in Löcher 26 im Führungsblech 20 ein. Die endgültige Fixierung des Führungsblechs 20 erfolgt erst durch die Verbindung des Aufsatzteils 12 mit dem Geräterahmen 8. Bei der Verbindung des Aufsatzteils 12 mit dem Geräterahmen 8 handelt es sich im Ausführungsbeispiel um eine Schnappverbindung 21. Die Schnappverbindung 21 wird hergestellt mit Hilfe von Klauen 22, welche jeweils einerseits in eine Verbindungskontur 23 des Aufsatzteils 12 und andererseits in eine gehäuseseitige Verbindungskontur 24 am Geräterahmen 8 eingreifen. Insgesamt ist damit die Fördervorrichtung 1, abgestimmt auf die zu fördernden Werkstücke 18, werkzeuglos zusammensetzbar.

Um die Fördervorrichtung 1 auf andere Werkstücke 18, insbesondere ebenfalls bolzenförmige Werkstücke 18 mit größerem oder kleinerem Durchmesser, umzurüsten, werden zunächst die Schlauchkupplungen 14, 15 gelöst. Im nächsten Schritt wird der Reibschluss zwischen den Förderscheiben 9, 10 und den Werkstücken 18 durch Betätigung der Schraubverstellung 11 aufgehoben. Aus dem nunmehr erweiterten Förderkanal 19 können die in der Fördervorrichtung 1 verbliebenen Werkstücke 18 mit einem flexiblen, strangförmigen Hilfsmittel, beispielsweise einem Stück Schlauch, entfernt werden. Im Anschluss werden die Klauen 22 abgenommen und das Aufsatzteil 12 entfernt. In diesem Zustand kann das Führungsblech 20, welches nun frei liegt, von den Zapfen 25 abgezogen werden.

Zur Vorbereitung auf die Förderung von Werkstücken 18 anderer Dimensionierung kann eines dieser neuen Werkstücke 18 noch bei abgenommenem Aufsatzteil 12 per Hand zwischen die Förderscheiben 9, 10 eingesetzt werden, um den Abstand d_{F} zwischen den Förderscheiben 9, 10 einzustellen. Der weitere Montagevorgang erfolgt in umgekehrter Reihenfolge wie der beschriebene Vorgang der Demontage. Auch nach dem Zusammenbau der Fördervorrichtung 1 ist jederzeit eine Feinjustierung des Abstandes d_{F} zwischen den Förderscheiben 9, 10 möglich. Ein kompletter Werkzeugwechsel, das heißt Austausch von Aufsatzteil 12 und Einsatzelement 20, ist in weniger als zwei Minuten durchführbar.

### Bezugszeichenliste

1 Fördervorrichtung
2 Basisgerät
3 Getriebemotor
4 Elektromotor
5 Getriebe
6 Welle
7 Überlastkupplung
8 Geräterahmen
9 Förderscheibe
10 Förderscheibe
11 Schraubverstellung
12 Aufsatzteil, Gehäusewerkzeug
13 zentrale kreisrunde Öffnung im Aufsatzteil
14 eingangsseitige Schlauchkupplung
15 ausgangsseitige Schlauchkupplung
16 Kupplungsstück
17 Kupplungsstück
18 Werkstück
19 Förderkanal
20 Einsatzelement, Führungsblech
21 Schnappverbindung
22 Klaue
23 Verbindungskontur des Aufsatzteils
24 gehäuseseitige Verbindungskontur
25 Zapfen am Geräterahmen
26 Loch im Führungsblech
d_{F} Abstand zwischen den Förderscheiben
D₂₀ Dicke des Führungsbleches
R Rotationsachse

## Patentansprüche

1. Fördervorrichtung für zylindrische Werkstücke, umfassend ein Basisgerät (2), welches zwei zusammen antreibbare Förderscheiben (9, 10) aufweist, deren Abstand zueinander einstellbar ist, **dadurch gekennzeichnet, dass** ein am Basisgerät (2) befestigbares Aufsatzteil (12) und ein Einsatzelement (20), welches derart zwischen dem Basisgerät (2) und dem Aufsatzteil (12) positionierbar ist, vorhanden ist, dass durch die Förderscheiben (9, 10), das Aufsatzteil (12) und das Einsatzelement (20) ein Förderkanal (19) für die zylindrischen Werkstücke gebildet ist, welcher sich über mehr als 45° um die Rotationsachse der Förderscheiben (9, 10) erstreckt.

2. Fördervorrichtung nach Anspruch 1, **gekennzeichnet durch** zwei am Aufsatzteil (12) angeordnete, zum Anschluss von Schläuchen geeignete Kupplungsstücke (16, 17).

3. Fördervorrichtung nach Anspruch 2, **dadurch gekennzeichnet, dass** die Kupplungsstücke (16, 17) Teile von selbstschließenden, das Herausfallen von Werkstücken verhindernden Schlauchkupplungen (14, 15) sind.

4. Fördervorrichtung nach Anspruch 2 oder 3, **dadurch gekennzeichnet, dass** die Kupplungsstücke (16, 17) nebeneinander angeordnet sind und der Förderkanal (19) als 180°-Umlenkkanal ausgebildet ist.

5. Fördervorrichtung nach einem der Ansprüche 1 bis 4, **dadurch gekennzeichnet, dass** das Aufsatzteil (12) rahmenförmig gestaltet und zur Befestigung an einem durch das Basisgerät (2) gebildeten Geräterahmen (8) vorgesehen ist.

6. Fördervorrichtung nach Anspruch 5, **dadurch gekennzeichnet, dass** die Förderscheiben (9, 10) derart verstellbar sind, dass eine der Förderscheiben (9) stirnseitig aus dem rahmenförmigen Aufsatzteil (12) herausragt, wobei eine kreisrunde Öffnung (13) im Aufsatzteil (12) durch diese Förderscheibe (9) größtenteils ausgefüllt wird.

7. Fördervorrichtung nach einem der Ansprüche 1 bis 6, **dadurch gekennzeichnet, dass** das Einsatzelement (20) in Axialrichtung der Förderscheiben (9, 10) schmaler als der Förderkanal (19) ist.

8. Fördervorrichtung nach Anspruch 7, **dadurch gekennzeichnet, dass** das Einsatzelement (20) am Basisgerät (2) einhängbar und durch das Aufsatzteil (12) am Basisgerät (2) sicherbar ist.

9. Fördervorrichtung nach einem der Ansprüche 1 bis 8, **gekennzeichnet durch** eine zur Befestigung des Aufsatzteils (12) am Basisgerät (2) ausgebildete Schnappverbindung (21).

10. Fördervorrichtung nach einem der Ansprüche 1 bis 9, **gekennzeichnet durch** eine zwischen einen Elektromotor (4) des Basisgerätes (2) und die Förderscheiben (9, 10) geschaltete Überlastkupplung (7).

## Claims

1. A conveyor device for cylindrical workpieces, comprising a main unit (2) which has two conveyor discs (9, 10) that can be driven together, the distance between them being adjustable, **characterised in that** an attachment part (12) that can be attached to the main unit (2) and an insert element (20) that can be positioned in such a way between the main unit (2) and the attachment part (12) are present, **in that** a conveying channel (19) for the cylindrical workpieces is formed by the conveyor discs (9, 10), the attachment part (12) and the insert element (20), which extends over more than 45° about the rotational axis of the conveyor discs (9, 10).

2. The conveyor device according to claim 1, **characterised by** two coupling pieces (16, 17) disposed on the attachment part (12) that are suitable for connecting hoses.

3. The conveyor device according to claim 2, **characterised in that** the coupling pieces (16, 17) are parts of self-closing hose couplings (14, 15) that prevent workpieces from falling out.

4. The conveyor device according to claim 2 or 3, **characterised in that** the coupling pieces (16, 17) are disposed side by side and the conveying channel (19) is configured as an 180° diversion channel.

5. The conveyor device according to one of claims 1 to 4, **characterised in that** the attachment part (12) has a frame-like design and is provided for attachment to a unit frame (8) formed by the main unit (2).

6. The conveyor device according to claim 5, **characterised in that** the conveyor discs (9, 10) are adjustable in such a way that one of the conveyor discs (9) protrudes from the frame-like attachment part (12) at the front, a circular opening (13) in the attachment part (12) being largely filled by this conveyor disc (9).

7. The conveyor device according to one of claims 1 to 6, **characterised in that** the insert element (20) is narrower than the conveying channel (19) in the axial direction of the conveyor discs (9, 10).

8. The conveyor device according to claim 7, **characterised in that** the insert element (20) can be mounted on the main unit (2) and secured to the main unit (2) by the attachment part (12).

9. The conveyor device according to one of claims 1 to 8, **characterised by** a snap fit (21) configured to attach the attachment part (12) to the main unit (2).

10. The conveyor device according to one of claims 1 to 9, **characterised by** an overload coupling (7) connected between an electric motor (4) of the main unit (2) and the conveyor discs (9, 10).

## Revendications

1. Dispositif transporteur pour pièces cylindriques, comprenant un appareil de base (2), lequel présente deux disques transporteurs (9, 10) pouvant être entraînés ensemble, la distance entre eux étant réglable, **caractérisé en ce qu'**une pièce rapportée (12) pouvant être fixée sur l'appareil de base (2) et un élément d'insertion (20), sont disponibles, lequel élément d'insertion peut être positionné de la sorte entre l'appareil de base (2) et la pièce rapportée (12) de façon qu'un canal transporteur (19) pour les pièces cylindriques soit formé par les disques transporteurs (9, 10), la pièce rapportée (12) et l'élément d'insertion (20), lequel canal s'étend sur plus de 45° autour de l'axe de rotation des disques transporteurs (9, 10).

2. Dispositif transporteur selon la revendication 1, **caractérisé par** deux pièces d'accouplement (16, 17) agencées sur la pièce rapportée (12), adaptées pour le raccordement de tuyaux flexibles.

3. Dispositif transporteur selon la revendication 2, **caractérisé en ce que** les pièces d'accouplement (16, 17) sont des parties d'accouplements de tuyaux flexibles (14, 15) à fermeture automatique, empêchant la chute de pièces.

4. Dispositif transporteur selon la revendication 2 ou 3, **caractérisé en ce que** les pièces d'accouplement (16, 17) sont agencées adjacentes l'une à l'autre et le canal transporteur (19) est réalisé sous la forme d'un canal de déviation de 180°.

5. Dispositif transporteur selon l'une quelconque des revendications 1 à 4, **caractérisé en ce que** la pièce rapportée (12) est conçue en forme de cadre et est prévue pour être fixée sur un cadre d'appareil (8) formé par l'appareil de base (2).

6. Dispositif transporteur selon la revendication 5, **caractérisé en ce que** les disques transporteurs (9, 10) sont réglables de façon qu'un des disques transporteurs (9) fasse saillie côté avant de la pièce rapportée (12) en forme de cadre, dans lequel une ouverture (13) circulaire dans la pièce rapportée (12) est remplie en grande partie par ce disque transporteur (9).

7. Dispositif transporteur selon l'une quelconque des revendications 1 à 6, **caractérisé en ce que** l'élément d'insertion (20) est plus étroit que le canal transporteur (19) dans la direction axiale des disques transporteurs (9, 10).

8. Dispositif transporteur selon la revendication 7, **caractérisé en ce que** l'élément d'insertion (20) peut être accroché à l'appareil de base (2) et peut être fixé à l'appareil de base (2) par la pièce rapportée (12).

9. Dispositif transporteur selon l'une quelconque des revendications 1 à 8, **caractérisé par** une liaison par encliquetage (21) réalisée pour fixer la pièce rapportée (12) sur l'appareil de base (2).

10. Dispositif transporteur selon l'une quelconque des revendications 1 à 9, **caractérisé par** un accouplement de surcharge (7) branché entre un moteur électrique (4) de l'appareil de base (2) et les disques transporteurs (9, 10).
